Europäisches Patentamt

European Patent Office

Office européen des brevets

(11) Publication number: **0 270 089 B1**

(19)

# EUROPEAN PATENT SPECIFICATION

(12)

(45) Date of publication of patent specification: **21.11.91**    (51) Int. Cl.5: **F16D 69/02**

(21) Application number: **87117812.5**

(22) Date of filing: **02.12.87**

(54) Friction material composite.

(30) Priority: **04.12.86 JP 289590/86**
         **06.07.87 JP 168488/87**

(43) Date of publication of application:
**08.06.88 Bulletin 88/23**

(45) Publication of the grant of the patent:
**21.11.91 Bulletin 91/47**

(84) Designated Contracting States:
**DE FR GB SE**

(56) References cited:
**DE-A- 3 637 997**
**GB-A- 2 000 793**
**GB-A- 2 163 784**
**US-A- 4 119 591**

(73) Proprietor: **NIPPONDENSO CO., LTD.**
**1-1, Showa-cho**
**Kariya-shi Aichi-ken(JP)**

Proprietor: **SUMITOMO ELECTRIC INDUS-TRIES, LTD.**
**5-33, Kitahama 4-chome, Chuo-ku**
**Osaka-shi, Osaka 541(JP)**

(72) Inventor: **Asano, Hiroshi Itami Works**
**Sumito Electric Ind. Ltd. 1-1 Koyakita**
**1-chome**
**Itami-shi Hyogo-ken(JP)**
Inventor: **Iwata, Kouichi Itami Works**
**Sumito Electric Ind. Ltd. 1-1 Koyakita**
**1-chome**
**Itami-shi Hyogo-ken(JP)**

(74) Representative: **Patentanwälte Kirschner & Grosse**
**Forstenrieder Allee 59**
**W-8000 München 71(DE)**

EP 0 270 089 B1

**Description**

BACKGROUND OF THE INVENTION

Field of the Invention

The present invention relates to a friction material composite as disclosed in the preamble of Claim 1 and suitable for use as a friction member such as a brake lining or a clutch facing applied to a torque transmission member such as an electromagnetic clutch.

Description of the Prior Art

In general, a friction material for a brake lining or a clutch facing which is applied to a torque transmission member such as an electromagnetic clutch is prepared by adding a binder of thermosetting resin such as phenol resin to asbestos fiber, inorganic and organic fillers and an organic friction conditioner etc., performing hot press forming of the mixture and hardening the same. However, as public nuisance of asbestos dust has been discussed with great interest, a friction material containing no asbestos fiber is required not only for mobile application but also for electromagnetic clutches for driving a business machine and an industrial machine.

Such asbestos fiber is replaced by metallic fiber, glass fiber, ceramic fiber, synthetic fiber or the like, and a friction member prepared by steel fiber, the so-called semi-metallic pad, has been locally put into practice for mobile application.

However, such a semi-metallic pad prepared by steel fiber is not applied to a friction member for an electromagnetic clutch, which must be of a nonmagnetic substance. Further, although a friction material prepared by glass fiber has been locally applied to a clutch plate in practice, such a material will not be of great utility in the future since the raw material therefor is high-priced and the same is inferior in workability in handling.

Aramid fiber, which is recently being watched with interest, has also been practically employed for a friction member for mobile application, whereas wide use of the same is not promised because of the high cost, similarly to the material prepared by glass fiber.

Thus, awaited is development of a non-asbestos friction material, which can be prepared by low-priced raw materials.

SUMMARY OF THE INVENTION

The inventors have already developed a friction material which is equivalent to or higher than a conventional non-asbestos friction material based on aramid fiber in performance. See Japanese Patent Laying-Open Gazette Nos. 261387/1986, 13479/1987 and 15281/1987 and U.S. Patent Application No. 4 735 975. Another non-asbestos friction material especially suitable for use as disk brake pads or drum shoe lining in the automotive industry is known from the British application 2 000 793 forming the preamble of Claim 1. This application discloses a friction material comprising a thermosetting resin, cashew nut particles, an organic or inorganic fibrous material and a powdered inorganic compound, whereby mineral wood may be used as fibrous material.

However, a friction member applied to an electromagnetic clutch must give excellent torque transmission ability even in an unused state dissimilarly to the friction member for mobile application, and the same must satisfy the condition of $\mu \geq 0.4$ in conversion to a friction coefficient. The aforementioned non-asbestos friction material developed by the inventors has not satisfied the above condition in simulation evaluation of application to an actual electromagnetic clutch. In this non-asbestos friction material, further, mixed powder being in a state previous to molding (hereinafter referred to as mixed powder) is flocculated to complicate steps of manufacturing homogenous products of ring-shaped friction plate such as an electromagnetic clutch, whereby the manufacturing cost is increased.

Accordingly, an object of the present invention is to provide a friction material composite, which is equivalent in friction characteristic to a conventional non-asbestos friction material based on aramid fiber, while a friction coefficient in an initial state thereof is in excess of that in a later state.

The present invention provides a friction material composite which comprises a reinforcing fiber material, an organic filler, an inorganic filler and a friction/abrasion conditioner and is bonded by a thermosetting resin binder. This composite contains 25 to 35 percent by volume of staple cellulose pulp of not more than 150 $\mu$m in fiber length as the reinforcing fiber material, 30 to 40 percent by volume of an

2

organic filler of not more than 840 μm in maximum grain size as the organic filler and 0.5 to 5 percent by volume of aluminum oxide and/or magnesium oxide of not more than 250 μm in maximum grain size as the friction/abrasion conditioner, while porosity thereof is 15 to 30 percent by volume.

DETAILED DESCRIPTION OF THE INVENTION

The inventive friction material composite contains 25 to 35 percent by volume of staple cellulose pulp as the reinforcing fiber material since the object of the present invention cannot be attained if the content of the staple cellulose pulp is smaller than 25 percent by volume because strength of a friction plate is lowered and abrasion resistance thereof is deteriorated, while the friction coefficient is deteriorated in stability if the said content is in excess of 35 percent by volume.

According to the present invention, the friction/abrasion conditioner is prepared by aluminum oxide and magnesium oxide. Either material may be independently employed, while such materials may also be combined with each other. The content of aluminum oxide and/or magnesium oxide is 0.5 to 5 percent by volume. If the content is less than 0.5 percent by volume, the friction coefficient becomes smaller than the target value of 0.4, whereby abrasion resistance is abruptly deteriorated. If the content exceeds 5 percent by volume, the friction coefficient is deteriorated in stability although the same is in excess of 0.4, while attack against a counter material is so extremely increased that the object of the present invention cannot be attained.

The friction/abrasion conditioner prepared by aluminum oxide and/or magnesium oxide in the present invention is preferably not more than 250 μm in maximum grain size. If the maximum grain size exceeds 250 μm, abrasion loss of the friction member and attack against the counter material are abruptly increased to extremely deteriorate stability of the friction coefficient.

The inventive composite contains 30 to 40 percent by volume of the organic filler of not more than 840 μm in maximum grain size. If the maximum grain size exceeds 840 μm, the organic filler cannot be homogenously mixed with other raw materials, to deteriorate the friction/abrasion characteristic.

A friction plate employed for an electromagnetic clutch is generally brought into pressure contact with an opposite driven power transmission member such as an armature, to transmit power by friction force in the pressure contact surface between the same while cutting off power transmission by releasing the pressure contact of these members. The compression characteristic of the friction plate is important to smooth such operation, and it is obvious from past experiences that the optimum 2 compression distortion factor per $9.8 \times 10^4$ Pa is larger than 0.1 %. Thus, the organic filler is preferably prepared by cork powder and/or cashew dust. The compression distortion factor can be adjusted to be at least 0.1 % with the content of cork powder and/or cashew dust being at least 30 percent by volume. However, if the content of cork powder and/or cashew dust exceeds 40 percent by volume, the friction/abrasion characteristic is undesirably instabilized although the compression distortion factor exceeds 0.1 %.

The inorganic filler employed in the present invention can be prepared by a generally used filler such as calcium carbonate.

Further, porosity of the friction material composite according to the present invention must be 15 to 30 percent by volume. If the porosity is smaller than 15 percent by volume, the compression distortion factor of the friction member is reduced and the friction coefficient in the initial state is lowered, whereby the surface of the friction plate is extremely irregularlized in color to deteriorate the product quality. If the porosity exceeds 30 percent by volume, the compression distortion factor of the friction member is increased to improve the friction coefficient in the initial state, whereas mechanical strength of the friction member is extremely lowered and abrasion resistance is deteriorated, and hence the object of the present invention cannot be attained.

The friction material composite according to the present invention is preferably applicable to a friction member for an electromagnetic clutch, since the same is substantially equivalent in abrasion resistance to the conventional non-asbestos friction material based on aramid fiber, and gives a high friction coefficient even in initial service. Particularly torque transmission ability of an electromagnetic clutch can be extremely improved by the present invention as compared with the conventional friction member, and hence the present invention can be applied to an electromagnetic clutch for driving a business machine or an industrial machine, to reduce the size and weight thereof.

Mixed powder of the friction material composite according to the present invention is not flocculated as the conventional mixed powder but is in fluidity, whereby the same can be easily handled to reduce the manufacturing steps as compared with the conventional case. Further, the inventive friction material composite employs no high-priced aramid fiber, whereby the same can be manufactured at a low cost.

These and other objects, features, aspects and advantages of the present invention will become more apparent from the following examples of the present invention when taken in conjunction with the accompanying drawings.

## BRIEF DESCRIPTION OF THE DRAWINGS

Fig. 1 illustrates relation between the number of interruption cycles and coefficients of static friction in a simulation test of electromagnetic clutches;

Fig. 2 illustrates abrasion loss in the simulation test of the electromagnetic clutches;

Fig. 3 is a schematic view showing an impregnation part of an apparatus for illustrating a quick porosity measuring method employed in the present invention; and

Fig. 4 is a schematic view showing a gravimetry part of the apparatus for illustrating the quick porosity measuring method employed in the present invention.

## EXAMPLES

The present invention is now described in detail with reference to Examples.

Reinforcing fiber materials were prepared by staple cellulose pulp, organic fillers were prepared by cork powder, cashew dust and synthetic rubber, inorganic fillers were prepared by calcium carbonate, friction/abrasion conditioners were prepared by aluminum oxide and magnesium oxide and thermosetting resin binders were prepared by powder phenol resin to be blended in compounding ratios as shown in Table 1 and homogenously mixed by a mixer. Prescribed amounts of such mixtures were weighed, to be molded by a compression molding machine. Molding conditions were as follows:

surface pressure: $9.8 \times 10^6$ Pa

mold temperature: $165^\circ$ C

molding time: 4 minutes

Thereafter the mixtures were subjected to heat treatment at $200^\circ$ C for 5 hours, and then the surfaces thereof were polished to manufacture clutch facings. Porosity values of these clutch facings were measured by a quick porosity measuring method disclosed in Japanese Patent Laying-Open Gazette No. 161438/1986. Table 1 also shows the results.

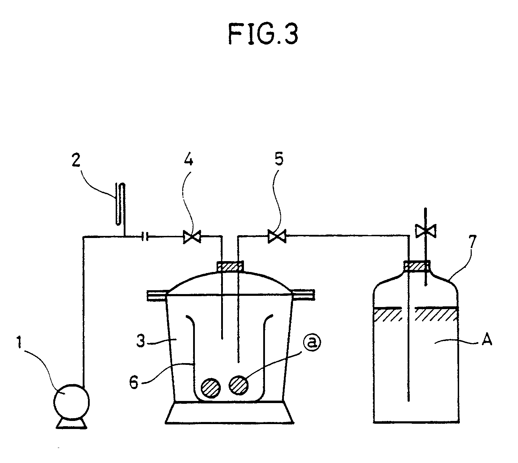

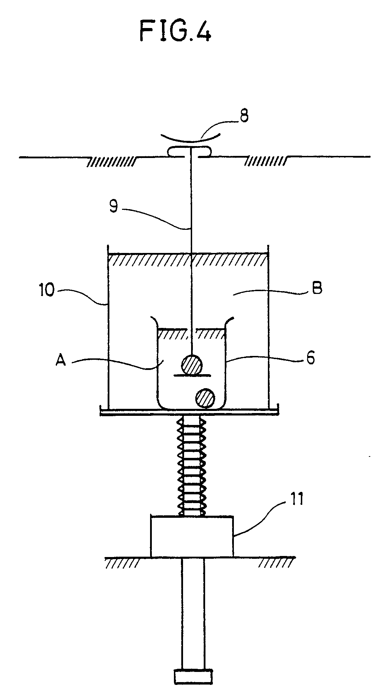

Figs. 3 and 4 are schematic views for illustrating the aforementioned quick porosity measuring method.

Referring to Figs. 3 and 4, a measuring apparatus comprises a vacuum pump 1, a manometer 2, a vacuum vessel 3, stop valves 4 and 5, a sample vessel 6, samples @, an impregnant solution A, an impregnant solution storing vessel 7, an electronic balance 8, a suspender 9, a water vessel 10, a liquid sealing solution B, being incompatible with the impregnant solution A, and a lift 11.

Each sample @ is sufficiently dried and the dead weight $W_A$ thereof is measured by the electronic balance 8. Thereafter the sample @ is introduced into the vacuum vessel 3 while the stop valve 4 is opened and the stop valve 5 is closed to degass the vacuum vessel 3 by the vacuum pump 1 to be not more than 5 mmHg. Then the stop valve 4 is closed and the stop valve 5 is opened to inject the impregnant solution A. Thereafter the sample vessel 6 is dipped in the water vessel 10 as shown in Fig. 4 to be sealed by the sealing solution B, and left in this state until the impregnant solution A infiltrates into pores.

Then the sample @ is placed on the suspender 9, to measure the weight $W_B$ thereof in the impregnant solution A. The water vessel 10 is lowered by the lift 11 to move only the suspender 9 into the sealing solution B thereby to zero-correct the weight thereof. Then the sample @ is placed on the suspender 9, to measure the weight $W_C$ thereof in the sealing solution B.

Assuming that $D_A$ represents density of the impregnant solution A and $D_B$ represents density of the sealing solution B, volume percent porosity P of the sample @ is expressed as follows:

$$P = \frac{W_C - W_A + D_B/D_A \cdot (W_A - W_B)}{W_C - W_B} \times 100(\%)$$

In the simulation test, the impregnant solution A was prepared by trichloro trifluoroethane, and the sealing solution B was prepared by water. Each sample @ was prepared by a doughnut-shaped plate of 99 mm in outer diameter, 86 mm in inner diameter and 2 mm in thickness, which was divided into quarters. Four sample members thus obtained were respectively measured to average the measured values.

## Table 1

(vol. %)

| composition | | Example | | | | | | | Reference Example | | | | | Prior Art |
|---|---|---|---|---|---|---|---|---|---|---|---|---|---|---|
| | | A | B | C | D | E | F | G | H | I | J | K | L | M |
| | cellulose pulp | 30 | 30 | 30 | 30 | 30 | 30 | 30 | 30 | 30 | 30 | 30 | 30 | 5 |
| | aromatic poly-aramid fiber | -- | -- | -- | -- | -- | -- | -- | -- | -- | -- | -- | -- | 15 |
| | cork powder | 17.5 | 35 | 35 | 35 | -- | -- | -- | 17.5 | 35 | 35 | -- | -- | 10 |
| | cashew dust powder | 17.5 | -- | -- | -- | 35 | 35 | 35 | 17.5 | -- | -- | 35 | 35 | 10 |
| | phenol resin | 10 | 10 | 10 | 10 | 10 | 10 | 10 | 10 | 10 | 10 | 10 | 10 | 25 |
| | synthetic rubber | 5 | 5 | 5 | 5 | 5 | 5 | 5 | 5 | 5 | 5 | 5 | 5 | 20 |
| | calcium carbonate | 18 | 19 | 18 | 15 | 19 | 18 | 15 | 20 | 19.7 | 13 | 19.7 | 13 | 8 |
| | graphite | -- | -- | -- | -- | -- | -- | -- | -- | -- | -- | -- | -- | 5 |
| | aluminum oxide | 1 | 1 | 2 | 5 | -- | -- | -- | -- | 0.3 | 7 | -- | -- | -- |
| | magnesium oxide | 1 | -- | -- | -- | 1 | 2 | 5 | -- | -- | -- | 0.3 | 7 | 2 |
| | Total | 100 | 100 | 100 | 100 | 100 | 100 | 100 | 100 | 100 | 100 | 100 | 100 | 100 |
| porosity (vol.%) | | 24 | 30 | 27 | 25 | 22 | 20 | 18 | 30 | 29 | 23 | 25 | 17 | 9 |

The clutch facings of Examples A to G, reference examples H to L and prior art M obtained in the aforementioned manner were subjected to the simulation test through a thrust type friction/abrasion tester under test conditions as shown in Table 2. Table 3 shows the results of the simulation test.

Table 2

| Size of Friction Plate | 99 mm in outer diameter, 86 mm in inner diameter, 2 mm in thickness |
|---|---|
| Counter Material | carbon steel (120 mm inouter diameter) |
| Effective Braking Radius | 0.046 m |
| Load | 100 kg (in manual torque measurement) |
| | 10 kg (in interruption) |
| Speed | 0 m/S (in manual torque measurement) |
| | 7.2 m/S (in interruption) |
| Interruption Cycle | ON for 3 sec. - OFF for 10 sec. |

Table 3

| | Example | | | | | | | Reference Example | | | | | Prior Art |
|---|---|---|---|---|---|---|---|---|---|---|---|---|---|
| | A | B | C | D | E | F | G | H | I | J | K | L | M |
| Initial $\mu_s$ a) | 0.56 | 0.54 | 0.54 | 0.54 | 0.58 | 0.59 | 0.61 | 0.55 | 0.39 | 0.56 | 0.53 | 0.62 | 0.36 |
| Initial $\mu_d$ b) | 0.53 | 0.47 | 0.48 | 0.49 | 0.54 | 0.54 | 0.58 | 0.51 | 0.36 | 0.51 | 0.49 | 0.59 | 0.33 |
| $\mu_s$ After Interruption $\mu_s$ c) | 0.48 | 0.51 | 0.52 | 0.49 | 0.44 | 0.46 | 0.46 | 0.60 | 0.50 | 0.50 | 0.46 | 0.47 | 0.42 |
| $\mu_d$ After Interruption | 0.46 | 0.48 | 0.49 | 0.47 | 0.43 | 0.45 | 0.45 | 0.54 | 0.46 | 0.48 | 0.45 | 0.46 | 0.40 |
| Abrasion Loss d) | 0.045 | 0.071 | 0.047 | 0.042 | 0.055 | 0.042 | 0.038 | 0.141 | 0.132 | 0.040 | 0.125 | 0.037 | 0.040 |
| Attack Against Counter Material e) | o | o | o | o | o | o | o | o | o | x | o | x | o |

a) $\mu_s$: coefficient of static friction
b) $\mu_d$: coefficient of dynamic friction
c) measured value after interruption of 100 times (friction coefficient in stable state)
d) abrasion loss after interruption test of 100 times
e) o: moderate, X: heavy

As obvious from Table 3, each of Examples A to G according to the present invention satisfies the condition that the friction coefficient in the initial state is higher than that in the stable state and exceeds 0.4 with no increase in attack against the counter material.

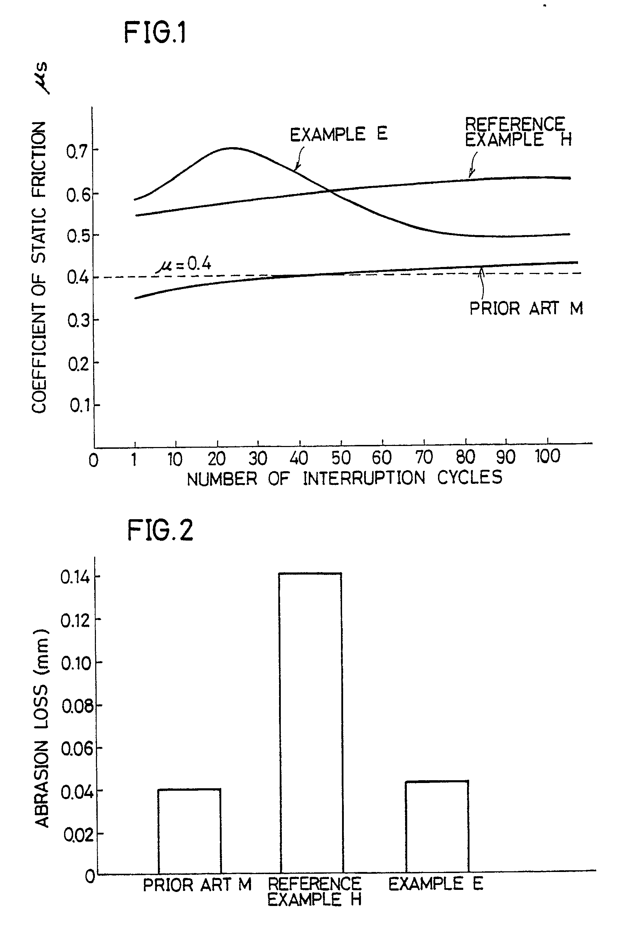

Fig. 1 shows relation between the number of interruption cycles and coefficients of static friction in the simulation test of the electromagnetic clutches of Example E, reference example H and prior art M. As obvious from Fig. 1, Example E is constantly higher in coefficient of static friction than prior art M. Further, the static friction coefficient in the initial state of Example E is higher than that in the stable state, to satisfy the characteristic required for an electromagnetic clutch.

Fig. 2 is a bar chart showing abrasion loss in the simulation test of the electromagnetic clutches of Example E, reference example H and prior art M. It is clearly understood from Fig. 2 that Example E according to the present invention has excellent abrasion resistance similarly to prior art M.

In order to study influence by porosity of friction material composites, clutch facings of different porosity values were manufactured at the compounding ratio of Example D as shown in Table 1.

Table 4

| | Example | | | Reference Example | |
|---|---|---|---|---|---|
| | N | D | O | P | Q |
| Porosity (vol.%) | 15 | 25 | 30 | 10 | 35 |
| Initial $\mu_s$ a) | 0.52 | 0.54 | 0.56 | 0.50 | 0.61 |
| Initial $\mu_d$ b) | 0.47 | 0.49 | 0.52 | 0.43 | 0.57 |
| $\mu_s$ After Interruption | 0.50 | 0.49 | 0.47 | 0.53 | |
| TFR ID = 17.01>c) | | | | | 0.46 |
| $\mu_d$ After Interruption | 0.48 | 0.47 | 0.45 | 0.51 | |
| | | | | | 0.44 |
| Abrasion Loss d) | 0.038 | 0.042 | 0.044 | 0.034 | 0.090 |
| Attack Against Counter Material e) | o | o | o | o | o |
| Material Strength f) | o | o | o | o | x |
| Appearance (Color Irregularity) g) | o | o | o | x | o |

a) to e) refer to Table 2
f) O: sufficient, x: insufficient
g) O: regular, x: irregular

As obvious from Table 4, the friction coefficient in 5 the initial state was higher than that in the stable state in each of Examples N, D and O, whose porosity values were within the range of 15 to 30 percent by volume according to the present invention, and was excellent in abrasion loss, attack against the counter material, material strength and appearance. On the other hand, the friction coefficient in the initial state was smaller than that in the stable state in reference example P having porosity of 10 percent by volume, and the surface of the friction plate thereof was irregularlized in color with inferior appearance. Reference example Q having porosity of 35 percent by volume presented high abrasion loss and inferior material strength.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A friction material composite comprising a reinforcing fiber material, an organic and an inorganic filler and a friction/abrasion conditioner and being bonded by a thermosetting resin binder, said friction material containing cellulose as reinforcing fiber, characterized in that said friction material composite contains 25 to 35 percent by volume of staple cellulose pulp of not more than 150 $\mu$m in fiber length as said reinforcing fiber material, 30 to 40 percent by volume of an organic filler of not more than 840 $\mu$m in maximum grain size as said organic filler and 0.5 to 5 percent by volume of aluminum oxide and/or magnesium oxide of not more than 250 $\mu$m in maximum grain size as said friction/abrasion conditioner, with porosity being 15 to 30 percent by volume.

2. A friction material composite in accordance with claim 1, wherein said organic filler contains cork powder.

3. A friction material composite in accordance with claim 1, wherein said organic filler contains cashew dust.

4. A friction material composite in accordance with claim 1, wherein said organic filler contains cork powder and cashew dust.

5. A friction material composite in accordance with claim 1, wherein said thermosetting resin binder contains powder phenol resin.

6. A friction material composite in accordance with claim 1, wherein said inorganic filler contains calcium carbonate.

## Revendications

1. Un matériau de friction composite comprenant un matériau de renforcement en fibres, une charge organique, une charge inorganique et un conditionneur de friction/abrasion, fixé par un liant de résine thermodurcissable,
ledit matériau de friction composite contenant de 25 à 35 pour cent en volume de pâte de cellulose de base ayant une longueur de fibres n'excédant pas 150 $\mu$m comme ledit matériau de renforcement en fibres, de 30 à 40 pour cent en volume d'une charge organique ayant une grosseur de grain maximale n'excédant pas 840 $\mu$m comme ladite charge organique et de 0,5 à 5 pour cent en volume d'oxyde d'aluminium et/ou d'oxyde de magnésium ayant une grosseur de grain maximale n'excédant pas 250 $\mu$m comme ledit conditionneur de friction/abrasion.

2. Un matériau de friction composite conforme à la revendication 1, dans lequel ladite charge organique contient de la poudre de liège.

3. Un matériau de friction composite conforme à la revendication 1, dans lequel ladite charge organique contient de la poussière d'anacardier.

4. Un matériau de friction composite conforme à la revendication 1, dans lequel ladite charge organique contient de la poudre de liège et de la poussière d'anacardier.

5. Un matériau de friction composite conforme à la revendication 1, dans lequel ledit liant de résine thermodurcissable contient de la résine phénolique en poudre.

6. Un matériau de friction composite conforme à la revendication 1, dans lequel ladite charge inorganique contient du carbonate de calcium.

## Patentansprüche

1. Zusammengesetztes Reibungsmaterial, welches einen verstärkenden Faserwerkstoff, einen organischen und einen anorganischen Füllstoff und einen Reibungs/Abrieb-Konditionierstoff aufweist und durch ein wärmehärtbares Harzbindemittel gebunden ist, wobei das Reibungsmaterial Zellulose als Verstärkungsfaser enthält, **dadurch gekennzeichnet, daß** das Reibungsmaterial 25 bis 35 Volumen-% Roh-Zellulosepulpe mit nicht mehr als 150 $\mu$m Faserlänge als Verstärkungsfaserwerkstoff, 30 bis 40 Volumen-% organischen Füllstoff mit nicht mehr als 840 $\mu$m maximale Teilchengröße als organischer Füllstoff und 0,5 bis 5 Volumen-% Aluminiumoxid und/oder Magnesiumoxid mit nicht mehr als 250 $\mu$m maximaler Teilchengröße als Reibungs/ Abrieb-Konditionierstoff enthält, wobei eine Porösität von 15 bis 30 Volumen-% vorhanden ist.

2. Zusammengesetztes Reibungsmaterial nach Anspruch 1, **dadurch gekennzeichnet, daß** der organische Füllstoff Korkmehl enthält.

3. Zusammengesetztes Reibungsmaterial nach Anspruch 1, **dadurch gekennzeichnet, daß** der organische Füllstoff Cashew-Staub enthält.

4. Zusammengesetztes Reibungsmaterial nach Anspruch 1, **dadurch gekennzeichnet, daß** der organische Füllstoff Korkmehl und Cashew-Staub enthält.

5. Zusammengesetztes Reibungsmaterial nach Anspruch 1, **dadurch gekennzeichnet, daß** das wärmehärtbare Harzbindemittel pulverförmiges Phenolharz enthält.

6. Zusammengesetztes Reibungsmaterial nach Anspruch 1, **dadurch gekennzeichnet, daß** der anorganische Füllstoff Kalziumkarbonat enthält.

## FIG.1

## FIG.2

# FIG.3

# FIG.4